# EUROPEAN PATENT SPECIFICATION

(11) **EP 0 949 626 B1**
(45) Date of publication and mention of the grant of the patent: **09.10.2002**
(21) Application number: 98106533.7
(22) Date of filing: 09.04.1998
(51) Int. Cl.: G11B 33/00, H04N 17/06

(54) **Method and apparatus for interactively changing EEPROM data of a video cassette tape recorder**
Verfahren und Gerät zur interaktiven Veränderung der EEPROM-Daten eines Videobandkassettenrekorders
Méthode et appareil pour changer de façon interactive les données EEPROM d'un enregistreur à bande de cassette vidéo

(43) Date of publication of application: 13.10.1999
(73) Proprietor: DAEWOO ELECTRONICS CO., LTD, Seoul (KR)
(72) Inventor: Jeong, Byoung-Chul, Pyeongtaik-Shi, Kyeongki-Do (KR)
(74) Representative: Dr. Weitzel & Partner

(56) References cited:
- US-A- 5 506 892

## Description

The present invention relates to a service mode of a video cassette tape recorder, and more particularly to a method and an apparatus for interactively changing an EEPROM data in a video cassette tape recorder following instructional pictures on a television screen by using a remote controller during a test or a repair thereof without any special instruments.

A video cassette tape recorder is designed and manufactured with a spec adequate to a received television broadcasting type such as an NTSC, a PAL and a SCECAM. Accordingly, manufacturers of the video cassette tape recorder adopt a scheme for improving a productivity by a unification and a standardization of components thereof in order to produce various productions adequate to various broadcasting type in one processing line.

Following the technical trends as mentioned above, the video cassette tape recorder adopts an integration of circuit components and a microcomputer control method and adopts a serial transmission method by which each circuit block and the microcomputer transfer a data therebetween. By adopting the serial transmission method, a circuit characteristic of a circuit block is easily changed according to various options. An option spec of each circuit block is standardized as a table so that an option data adequate to a set is set into an EEPROM with reference to the standardized table in producing and assembling levels.

U.S.Pat. No. 5,506,892 discloses a technique for rewriting the EEPROM data of the video cassette tape recorder by Local Application Control bus System (LANC).

As described above, since the conventional EEPROM data can be changed in a state where a special instrument such as a computer is connected to the set, the EEPROM data cannot be changed where there is no special instrument. So, there are obstacles in carrying out an operation at a laboratory, a test of a processing line and an after service.

More particularly, when the worker goes to a consumer's home to service the product, and if an error is detected, the worker cannot change circuit parameters at the place and must carry the set to an after-service center. So, the after service cannot be promptly carried out, and also takes an increased after service charge therewith. Also, a special instrument such as a computer must be used, which requires a trained technician.

The present invention is intended to overcome the above described disadvantages. Therefore, it is an object of the present invention to provide a method and an apparatus for interactively checking an error of a video cassette tape recorder without any special instruments.

In order to achieve the object of the present invention, there is provided a method according to claim 1 for interactively changing an EEPROM data of a video cassette tape recorder, which comprises displaying a service menu picture of a service mode on a television screen if the service mode is selected in response to a first remote controller input, displaying an EEPROM data change menu picture on the television screen if an EEPROM data change mode in the service menu picture is selected in response to a second remote controller input, displaying a characteristic value selection picture of a selected item on the television screen if the item in the EEPROM data change menu picture is selected in response to a third remote controller input, and changing an EEPROM data to a selected characteristic value if the characteristic value in the characteristic value selection picture is selected in response to a fourth remote controller input.

Also, in order to achieve the object of the present invention, there is provided a video cassette tape recorder according to claim 9, which comprises a video processing section for processing a video signal according to recorded and reproduced characteristics, an EEPROM for storing characteristic values of the recorded and reproduced characteristics of the video processing section, an input means for inputting a remote controller signal, an on-screen generating means for outputting an on-screen picture signal to a television screen after receiving an on-screen data and a control section for displaying a service menu picture of a service mode on a television screen by the on-screen generating means if the service mode is selected in response to a first remote controller input, displaying an EEPROM data change menu picture on the television screen if an EEPROM data change mode in the service menu picture is selected in response to a second remote controller input, displaying a characteristic value selection picture of a selected item on the television screen if the item in the EEPROM data change menu picture is selected in response to a third remote controller input and changing an EEPROM data to a selected characteristic value if the characteristic value in the characteristic value selection picture is selected in response to a fourth remote controller input.

The above object and other advantages of the present invention will become more apparent by describing in detail a preferred embodiment thereof with reference to the attached drawings in which:
FIG. 1 is a block diagram illustrating a structure of a video cassette tape recorder according to the present invention;
FIGs. 2A and 2B are a flowchart illustrating a method for interactively changing an EEPROM data of a video cassette tape recorder according to a preferred embodiment of the present invention; and
FIGs. 3 to 7 show interactive EEPROM data changing instructional pictures according to a preferred embodiment of the present invention.

Hereinafter, a method and an apparatus for interactively changing an EEPROM data of a video cassette tape recorder according to a preferred embodiment of the present invention will be explained in more detail with reference to the accompanying drawings.

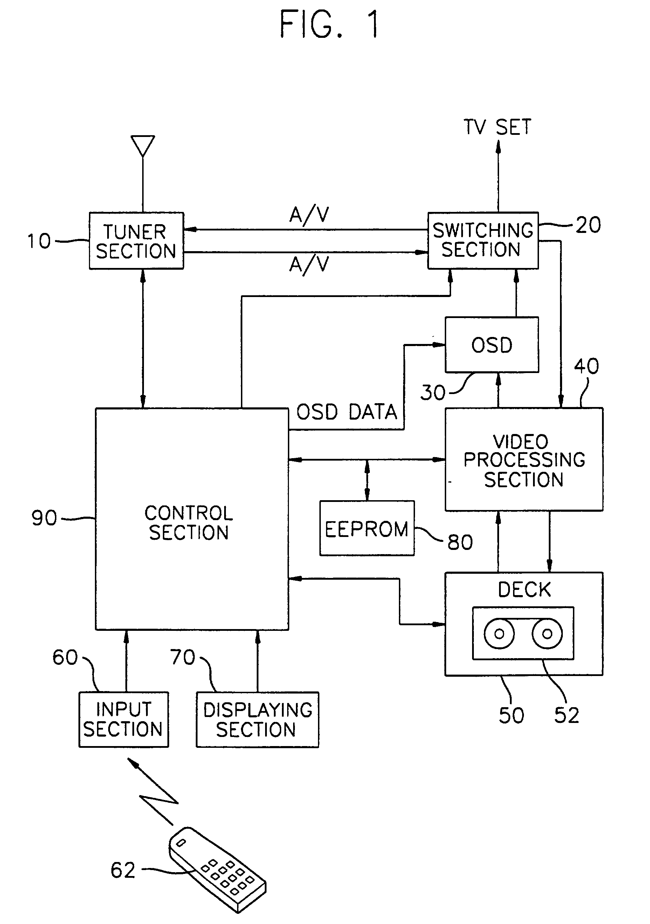

FIG. 1 is a block diagram illustrating a structure of a video cassette tape recorder according to the present invention. As shown in FIG. 1, a video cassette tape recorder includes a tuner section 10, a switching section 20, an on-screen generating section 30, a video processing section 40, a deck section 50, an input section 60, a display section 70, an EEPROM 80 and a control section 90.

Tuner section 10 tunes a broadcasting signal of a channel selected among television broadcasting signal received by an antenna, demodulates the tuned signal and outputs video and audio signals. Also, tuner section 10 modulates inputted video and audio signals into a broadcasting signal of a specific channel so as to output a high frequency signal. The high frequency signal is provided as an antenna input of a television set.

Switching section 20 switches the input/output of the video and audio signals according to an operation mode. A line-output of switching section 20 is line-inputted into the television set.

On-screen generating section 30 transforms an inputted on-screen data into an RGB signal, transforms the RGB signal into a video signal and superposes the video signal on a composite video signal so as to output the same.

Video processing section 40 separates the video signal reproduced from a video cassette tape by a video reproducing head into a luminance signal (Y signal) and a color signal and signal-processes the same.

A reproduced frequency modulated signal is phase-equalized, is phase clamped and is automatically gain-adjusted. The modulated signal which is gain-adjusted is limit-processed and demodulated. A demodulated luminance signal goes through a low-pass filtering, a luminance noise reducing process and de-emphasis processing. The de-emphasis processed signal goes through a noise reducing processing and is image controlled to adjust a visibility factor thereof. Meanwhile, the reproduced frequency modulated signal goes through the low-pass filter so as to be automatically color-controlled. The color-controlled signal is transformed up from 627KHz to 4.43MHz. The transformed color signal goes through a band-pass filtering, a cross-talk elimination and an amplifier so as to reduce the noise therein. The image-controlled luminance signal and the noise-reduced color signal are superposed by a mixer. Then, the superposed video signal is amplified so as to be outputted as a composite video signal to on-screen generating section 30.

The video signal inputted into video processing section 40 is video-amplified and a portion of 4.43MHz from the amplified signal is band-pass filtered. The filtered signal passes through a comfilter so as to be separated as a color signal. The separated color signal is automatically color-controlled and down-transformed to 627KHz. The down-transformed color signal is low-pass filtered. Meanwhile, the amplified video signal is attenuated to a half thereof, is low-pass filtered and passes through a luminance noise reducing processing. The noise reduced signal emphasizes to emphasis a high frequency band and is frequency modulated. The frequency modulated signal is record-equalizing processed. Thereafter, the low-pass filtered color signal and the equalizing processed frequency modulated signal are automatically gain-processed so as to be provided to a recording head.

Video processing section 40 processes the color and luminance signals through complicated processes. During the complicated processes, circuit characteristic value is required to be adjusted in order to set adequate circuit characteristics at each process. Particularly, in the luminance noise reducing process during the recording and the reproducing, the image control process for a visibility factor of an image during the reproducing, the emphasis process for emphasizing a high frequency band during the recording, circuit parameters are need to be adjusted. In the adjustment of the circuit parameters, a serial data is decoded and then, a value of each circuit parameter of a corresponding process is adjusted.

Deck section 50 includes a capstan motor, a drum motor, a reel motor and a loading motor, and operates a loading mechanism in order to reproduce/record a video signal from/onto a video cassette tape.

Input section 60 receives an optical signal of a remote controller 62 so as to generate a key signal in response to a pushing of a key pad on a front panel of the set.

Display section 70 includes an electron-ray indicator tube and displays a time and each operation mode state of the system.

EEPROM 80 stores system characteristic data such as a broadcasting type, a head type and recording/reproducing speed, and stores control characteristic data of recorded and reproduced video signals. The control characteristic data includes a pre-emphasis gain of the recorded signal, a ratio of a luminance signal to a noise therein (YNR) of the recorded and reproduced signals, a visibility factor of the reproduced signal, an image equalization characteristic and a record level. A pre-emphasis gain adjust data includes three steps consisting of a standard, a medium and a strong, a YNR data includes three steps consisting of a standard, a medium and a strong, and a visibility factor adjust data includes fifteen steps which are in a range of -7dB to +7dB.

Control section 90 includes a microcomputer. The microcomputer executes an operational program so as to control the above-described sections and executes a service mode program. Control section 90 is connected to video processing section 40 and EEPROM 80 through a serial data bus. Accordingly, video processing section 40 decodes an EEPROM data transmitted from control section 90 so as to adjust circuit parameter of each signal process according to a predetermined control characteristic.

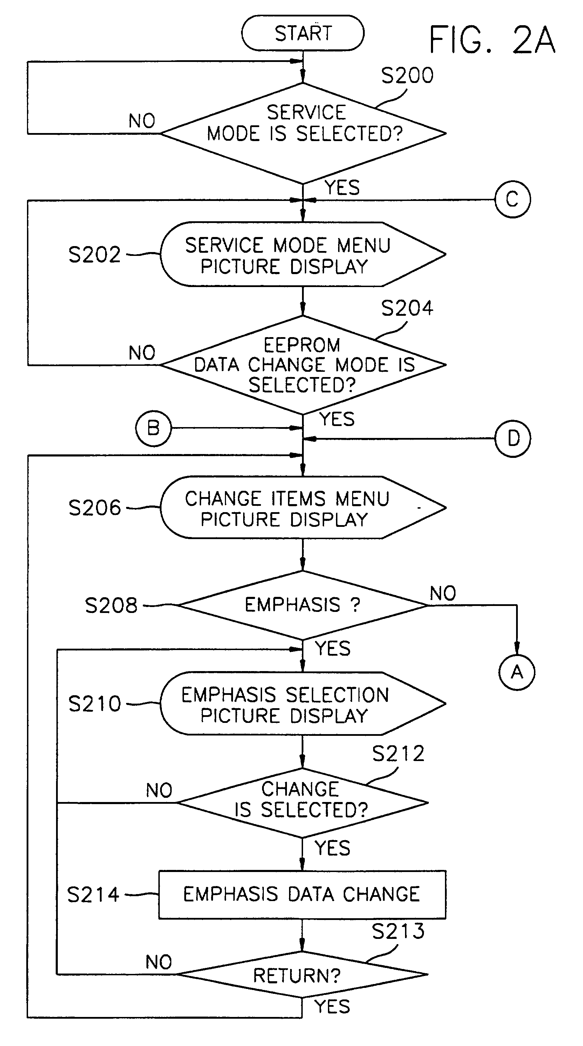

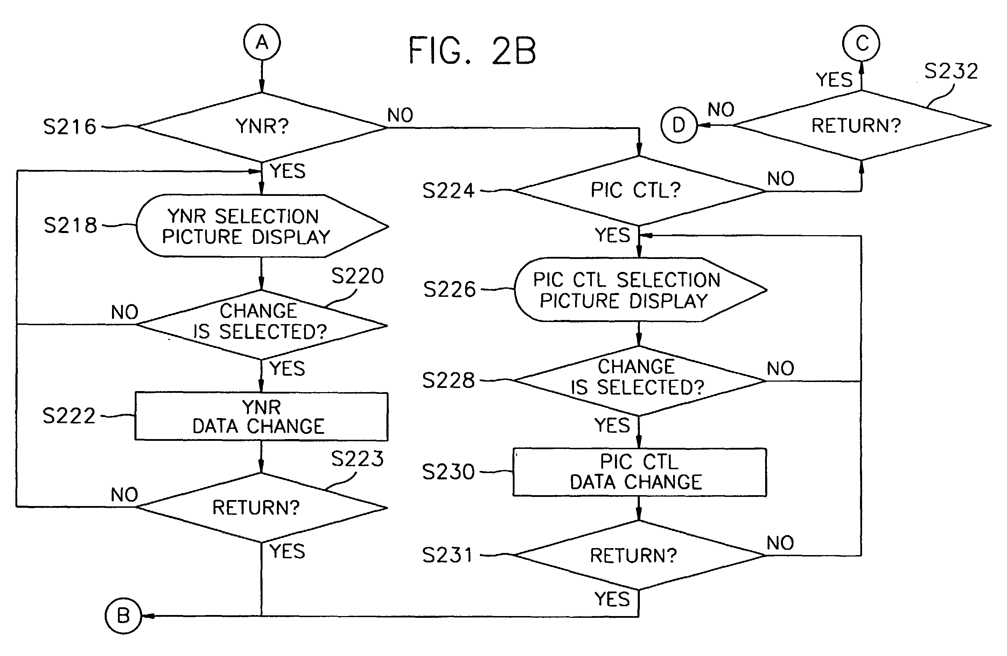

FIGs. 2A and 2B are a flowchart illustrating a method for interactively changing an EEPROM data according to a preferred embodiment of the present invention.

Repairmen execute a service mode in a state where the video cassette tape recorder is connected to the television set.

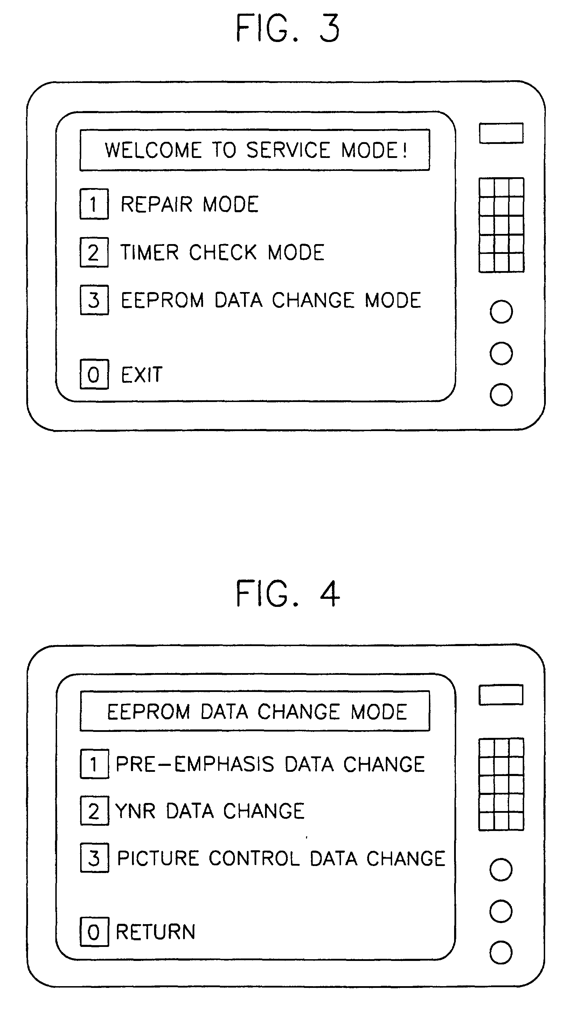

As shown in FIG. 2A, a service mode program according to the present invention is accessible only by a combination of password keys known only to a specific worker such as a set developer, a test worker or a repairman. This prevents consumers from accessing the service mode. The worker pushes a menu key at first by remote controller 62 and sequentially pushes password keys such as number keys "4", "8" or "4". Input section 60 receives a key signal of remote controller 62 and transmits the same to control section 90. Control section 90 determines that a service mode is selected if the inputted key combination is identical to a preset key combination (step S200) and transmits an on-screen data to on-screen generating section 30 so as to generate a video signal. The generated video signal is transmitted to the television set through switching section 20 so as to be displayed as an on-screen picture as shown in FIG. 3 (step S202). The service mode includes generally a repair mode, a timer check mode and an EEPROM data change mode.

Thereafter, if the worker pushes the number key "3" by remote controller 62 in order to select the EEPROM data change mode, and then the key signal is transmitted to control section 90 as described above. Control section 90 determines that the EEPROM data change mode is selected (step S204) and transmits an on-screen data to on-screen generating section 30. Accordingly, on-screen section 30 generates a video signal. The generated video signal is transmitted to the television set through switching section 20 so as to be displayed as an on-screen picture as shown in FIG. 4 (step S206). The EEPROM data change mode includes change items such as a pre-emphasis data change, a YNR data change and a picture control data change.

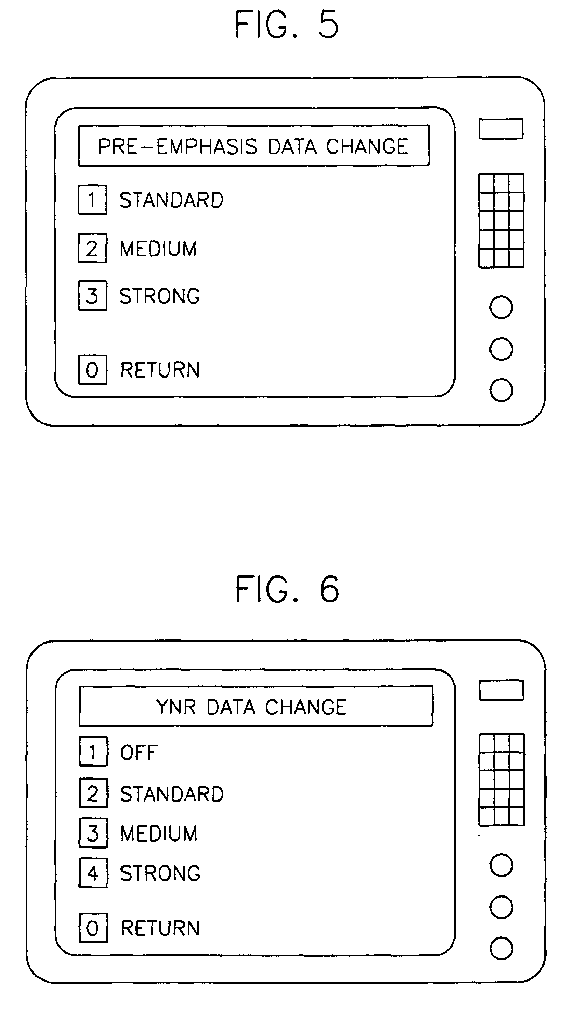

If, in order to select the pre-emphasis data change item, the worker pushes the number key "1", then through a similar operation as above described, control section 90 determines that the pre-emphasis data change mode is selected (step S208) and transmits an on-screen data to on-screen generating section 30. Accordingly, on-screen section 30 generates a video signal. The generated video signal is transmitted to the television set through switching section 20 so as to be displayed as an on-screen picture as shown in FIG. 5 (step S210).

If the worker pushes a corresponding number key in order to select any one out of the standard, the medium and the strong for the emphasis gain adjust while scanning the picture shown in FIG. 5, then through a similar operation as described above, control section 90 determines that the pre-emphasis data is selected (step S212) and changes an EEPROM data to the selected data (step S214). Control section 90 checks whether there is a return command after the data change is done(step S213) and if there in none, carries out step 210. While if there is the return command, control sections control the EEPROM data change process to return to step 206.

As shown in FIG. 2B, if at step 206, in order to select the YNR data change item, the worker pushes the number key "2", then through a similar operation as above-described, control section 90 determines that the YNR data change mode is selected (step S216) and transmits an on-screen data to on-screen generating section 30. Accordingly, on-screen section 30 generates a video signal. The generated video signal is transmitted to the television set through switching section 20 so as to be displayed as an on-screen picture as shown in FIG. 6 (step S218).

If the worker pushes a corresponding number key in order to select any one out of an OFF, the standard, the medium and the strong for the emphasis gain adjust while scanning the picture shown in FIG. 5, then through the same operation described above, control section 90 determines that the YNR data is selected (step S220) and changes an EEPROM data to the selected data (step S222). Control section 90 checks whether there is a return command after the data change is done(step S223) and if there in none, carries out step 218. Meanwhile if there is the return command, control sections control the EEPROM data change process to return to step 206.

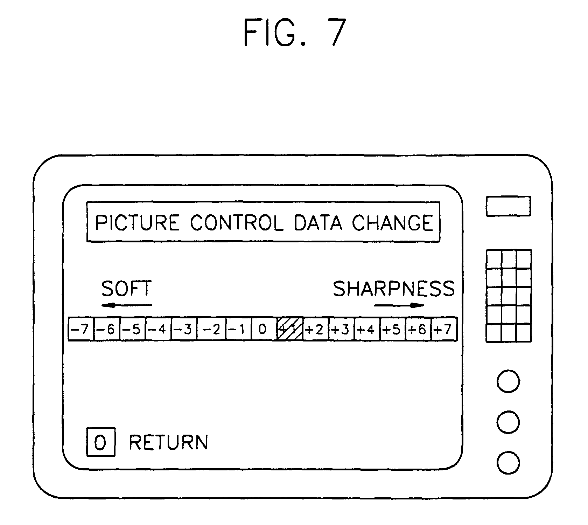

If, at step 206, in order to select the picture control data change item, the worker pushes the number key "3", then through a similar operation as above-described, control section 90 determines that the picture control data change mode is selected (step S224) and transmits an on-screen data to on-screen generating section 30. Accordingly, on-screen section 30 generates a video signal. The generated video signal is transmitted to the television set through switching section 20 so as to be displayed as an on-screen picture as shown in FIG. 7 (step S226).

The worker positions a cursor at a desired step by manipulating left/right arrow keys in order to select any one step between -7dB and +7dB for the picture control adjust while scanning the picture shown in FIG. 7. Then, if the worker pushes an "OK" key at the desired step, then through the same operation described above, control section 90 determines that the picture control data is selected (step S228) and changes an EEPROM data to the selected data (step S230). Control section 90 checks whether there is a return command after the data change (step S231) and if there in none, carries out step 226. Meanwhile, if there is the return command, control sections control the EEPROM data change process to return to step 206.

In step 206, if the worker pushes the number key "0", then control section 90 carries out step 202 to return to the menu picture.

As described above, by the method and apparatus for interactively changing an EEPROM data of a video cassette tape recorder according to the present invention, the worker can easily change the EEPROM data of the video cassette tape recorder without any special test instrument at a research laboratory, a test process in the manufacturing line or a service place.

Also, even an unskilled worker can interactively carry out the changing operation by following the sequential instructions displayed on the pictures with the remote controller.

Particularly, when the worker goes to a consumer's home in order to change the control characteristic value of the set during an after-service visit, the worker can readily access the service mode by the remote controller and can change the EEPROM data so that the set does not have to be carried to an after service-center, and all service operations can be carried out at the home without any special instrument, thereby reducing a charge for the after service and providing a prompt after service.

## Claims

1. A method for interactively changing an EEPROM data of a video cassette tape recorder, said method **characterized by** comprising the steps of:
(i) displaying a service menu picture of a service mode on a television screen if the service mode is selected in response to a first remote controller input;
(ii) displaying an EEPROM data change menu picture on the television screen if an EEPROM data change mode in the service menu picture is selected in response to a second remote controller input;
(iii) displaying a characteristic value selection picture of a selected item on the television screen if the item in the EEPROM data change menu picture is selected in response to a third remote controller input; and
(iv) changing an EEPROM data to a selected characteristic value if the characteristic value in the characteristic value selection picture is selected in response to a fourth remote controller input.

2. The method for interactively changing an EEPROM data of a video cassette tape recorder recited in claim 1, **characterized in that** in step (i), the service mode is selected by a combination of at least three remote controller inputs.

3. The method for interactively changing an EEPROM data of a video cassette tape recorder recited in claim 2, **characterized in that** the combination of at least three remote controller inputs is known only to a maker or to service workers.

4. The method for interactively changing an EEPROM data of a video cassette tape recorder recited in claim 1, **characterized in that** the EEPROM data is a control characteristic of a recorded video signal or a reproduced video signal.

5. The method for interactively changing an EEPROM data of a video cassette tape recorder recited in claim 4, **characterized in that** the control characteristic of the video signal is at least one out of a pre-emphasis gain of a recorded signal, a ratio of a luminance signal to a noise of recorded and reproduced signals, a visibility factor of a reproduced signal.

6. The method for interactively changing an EEPROM data of a video cassette tape recorder recited in claim 5, **characterized in that** the pre-emphasis gain is selected to any one out of a standard, a medium and a strong.

7. The method for interactively changing an EEPROM data of a video cassette tape recorder recited in claim 5, **characterized in that** the ratio of the luminance signal to the noise is selected from any one out of a standard, a medium and a strong.

8. The method for interactively changing an EEPROM data of a video cassette tape recorder recited in claim 5, **characterized in that** the visibility factor is selected to a level which is in a range of -7dB to +7dB.

9. A video cassette tape recorder, comprising,
a video processing section (40) for processing a video signal according to recorded and reproduced characteristics;
an EEPROM (80) for storing characteristic values of the recorded and reproduced characteristics of the video processing section, **characterized by** further comprising :
an input means (60) for inputting a remote control signal;
an on-screen generating means (30) for outputting an on-screen picture signal to a television after receiving an on-screen data; and
a control section (90) for displaying a service menu picture of a service mode on a television screen by the on-screen generating means if the service mode is selected in response to a first remote controller input, displaying an EEPROM data change menu picture on the television screen if an EEPROM data change mode in the service menu picture is selected in response to a second remote control input, displaying a characteristic value selection picture of a selected item on the television screen if the item in the EEPROM data change menu picture is selected in response to a third remote control input and changing an EEPROM data to a selected characteristic value if the characteristic value in the characteristic value selection picture is selected in response to a fourth remote control input.

## Patentansprüche

1. Verfahren zur interaktiven Änderung eines EEPROM-Datums eines Videokassettenrekorders, wobei das Verfahren **dadurch gekennzeichnet ist, dass** es folgende Schritte enthält:
(i) Anzeige eines Servicemenübildes eines Servicemodus auf einem TV-Bildschirm, wenn der Servicemodus als Reaktion auf eine erste Eingabe einer Fernbedienung ausgewählt wird;
(ii) Anzeige eines EEPROM-Datenänderungs-Menüblldes auf dem TV-Bildschirm, wenn als Reaktion auf eine zweite Eingabe einer Fernbedienung ein EEPROM-Datenänderungsmodus ein EEPROM-Datenänderungsmodus im Servicemenübild ausgewählt wird;
(iii) Anzeige eines Bildes zur Auswahl eines Kennwertes eines ausgewählten Eintrags auf dem TV-Bildschirm, wenn der Eintrag im EEPROM-Datenänderungsmenüblld als Reaktion auf eine dritte Eingabe einer Fernbedienung ausgewählt wird; und
(iv) Ändern eines EEPROM-Datums auf einen ausgewählten Kennwert, wenn der Kennwert im Kennwertauswahlbild als Reaktion auf eine vierte Eingabe einer Fernbedienung ausgewählt wurde.

2. Verfahren zur interaktiven Änderung eines EEPROM-Datums eines Videokassettenrekorders nach Anspruch 1, **dadurch gekennzeichnet, dass** in Schritt (i) der Servicemodus durch eine Kombination von mindestens drei Fernbedienungseingaben ausgewählt wird.

3. Verfahren zur interaktiven Änderung eines EEPROM-Datums eines Videokassettenrekorders nach Anspruch 2, **dadurch gekennzeichnet, dass** die Kombination von mindestens drei Fernbedienungseingaben nur einem Hersteller oder Servicearbeitern bekannt ist.

4. Verfahren zur interaktiven Änderung eines EEPROM-Datums eines Videokassettenrekorders nach Anspruch 1, **dadurch gekennzeichnet, dass** das EEPROM-Datum eine Regelkennlinie eines aufgenommenen Videosignals oder eines wiedergegebenen Videosignals ist.

5. Verfahren zur interaktiven Änderung eines EEPROM-Datums eines Videokassettenrekorders nach Anspruch 4, **dadurch gekennzeichnet, dass** die Regelkennlinie des Videosignals mindestens eine ist aus:
Vorverzerrungsverstärkung eines aufgezeichneten Signals, ein Verhältnis eines Leuchtdichtesignals zu einem Rauschen eines aufgezeichneten und wiedergegebenen Signals, ein photometrisches Strahlungsäquivalent eines wiedergegebenen Signals.

6. Verfahren zur interaktiven Änderung eines EEPROM-Datums eines Videokassettenrekorders nach Anspruch 5, **dadurch gekennzeichnet, dass** die Vorverzerrungsverstärkung ausgewählt ist aus Standard, Mittel und Stark.

7. Verfahren zur interaktiven Änderung eines EEPROM-Datums eines Videokassettenrekorders nach Anspruch 5, **dadurch gekennzeichnet, dass** das Verhältnis des Leuchtdichtesignals zum Rauschen ausgewählt ist aus Standard, Mittel und Stark.

8. Verfahren zur interaktiven Änderung eines EEPROM-Datums eines Videokassettenrekorders nach Anspruch 5, **dadurch gekennzeichnet, dass** das photometrische Strahlungsäquivalent auf einen Wert im Bereich von -7dB bis +7dB ausgewählt ist.

9. Videokassettenrekorder, umfassend einen Videobearbeitungsabschnitt (40) zur Bearbeitung eines Videosignals in Entsprechung zu aufgezeichneten und wiedergegebenen Kennlinien;
ein EEPROM (80) zur Speicherung von Kennwerten der aufgezeichneten und wiedergegebenen Kennwerten des Videobearbeitungsabschnitts, **gekennzeichnet dadurch, dass** es ferner umfasst:
ein Eingabemittel (60) zur Eingabe eines Fernbedienungssignals;
ein Bildschirm-Generierungsmittel (30) zur Ausgabe eines Bildschirm-Bildsignals an ein Fernsehgerät nach Empfang eines Bildschirmdatums; und
einen Reglerabschnitt (90) zur Anzeige eines Servicemenübildes eines Servicemodus auf einem TV-Bildschirm durch das Bildschirm-Generierungsmittel, wenn der Servicemodus als Reaktion auf eine erste Fernbedienungseingabe ausgewählt wird, zur Anzeige eines EEPROM-Datenänderungs-Menübilds auf dem TV-Bildschirm, wenn ein EEPROM-Datenänderungsmodus im Servicemenübild als Reaktion auf eine zweite Fernbedienungseingabe ausgewählt wird, zur Anzeige eines Kennwert-Auswahlblldes eines ausgewählten Eintrags auf dem TV-Bildschirm, wenn der Eintrag im EEPROM-Datenänderungsmenübild als Reaktion auf eine dritte Fernbedienungseingabe ausgewählt wird und zum Ändern eines EEPROM-Datums auf einen ausgewählten Kennwert, wenn der Kennwert im Kennwertauswahlbild als Reaktion auf eine vierte Fernbedienungseingabe ausgewählt wird.

## Revendications

1. Méthode de modification interactive d'une donnée d'EEPROM pour un magnétoscope, **caractérisée en ce qu'**elle comporte les étapes suivantes :
(i) affichage d'une image de menu d'entretien pour un mode d'entretien sur un écran de télévision si le mode d'entretien est sélectionné en réponse à une première entrée de télécommande ;
(ii) affichage d'une image de menu de changement des données d'EEPROM sur l'écran de télévision si un mode de changement des données d'EEPROM est sélectionné dans l'image de menu d'entretien en réponse à une deuxième entrée de télécommande ;
(iii) affichage d'une image de sélection des valeurs caractéristiques pour un élément sélectionné sur l'écran de télévision si l'élément de l'image de menu de changement des données d'EEPROM est sélectionné en réponse à une troisième entrée de télécommande ; et
(iv) changement d'une donnée d'EEPROM pour lui donner une valeur caractéristique sélectionnée si la valeur caractéristique apparaissant dans l'image de sélection des valeurs caractéristiques est sélectionnée en réponse à une quatrième entrée de télécommande.

2. Méthode de modification interactive d'une donnée d'EEPROM pour un magnétoscope selon la revendication 1, **caractérisée en ce que** dans l'étape (i), le mode d'entretien est sélectionné à l'aide d'une combinaison d'au moins trois entrées de télécommande.

3. Méthode de modification interactive d'une donnée d'EEPROM pour un magnétoscope selon la revendication 2, **caractérisée en ce que** la combinaison d'au moins trois entrées de télécommande n'est connue que du fabricant ou des techniciens de maintenance.

4. Méthode de modification interactive d'une donnée d'EEPROM pour un magnétoscope selon la revendication 1, **caractérisée en ce que** la donnée d'EEPROM est une caractéristique de contrôle d'un signal vidéo enregistré ou d'un signal vidéo reproduit.

5. Méthode de modification interactive d'une donnée d'EEPROM pour un magnétoscope selon la revendication 4, **caractérisée en ce que** la caractéristique de contrôle du signal vidéo est l'une au moins des caractéristiques suivantes : gain de préaccentuation d'un signal enregistré, rapport entre signal de luminance et bruit des signaux enregistrés et reproduits, facteur de visibilité d'un signal reproduit.

6. Méthode de modification interactive d'une donnée d'EEPROM pour un magnétoscope selon la revendication 5, **caractérisée en ce que** le gain de préaccentuation est sélectionné entre trois niveaux standard, moyen ou élevé.

7. Méthode de modification interactive d'une donnée d'EEPROM pour un magnétoscope selon la revendication 5, **caractérisée en ce que** rapport entre le signal de luminance et le bruit est sélectionné entre trois niveaux standard, moyen ou élevé.

8. Méthode de modification interactive d'une donnée d'EEPROM pour un magnétoscope selon la revendication 5, **caractérisée en ce que** le facteur de visibilité est sélectionné à un niveau compris entre -7 dB et +7 dB.

9. Magnétoscope comprenant :
une section de traitement vidéo (40) destinée à traiter un signal vidéo selon des caractéristiques enregistrées et reproduites ;
une EEPROM (80) destinée à enregistrer les valeurs caractéristiques des caractéristiques enregistrées et reproduites de la section de traitement vidéo ;
**caractérisé en ce qu'**il comporte en outre :
un moyen d'entrée (60) pour l'entrée d'un signal de télécommande ;
un moyen de génération à l'écran (30) pour produire un signal d'image à l'écran destiné à un téléviseur après avoir reçu une donnée à l'écran ; et
une section de contrôle (90) destinée à afficher une image de menu d'entretien pour un mode de service sur un écran de télévision à l'aide du moyen de génération à l'écran si le mode d'entretien est sélectionné en réponse à une première entrée de télécommande, à afficher une image de menu de changement des données d'EEPROM sur l'écran de télévision si un mode de changement des données d'EEPROM est sélectionné dans l'image de menu d'entretien en réponse à une deuxième entrée de télécommande, à afficher une image de sélection des valeurs caractéristiques pour un élément sélectionné sur l'écran de télévision si l'élément de l'image de menu de changement des données d'EEPROM est sélectionné en réponse à une troisième entrée de télécommande, et à modifier une donnée d'EEPROM pour lui donner une valeur caractéristique sélectionnée si la valeur caractéristique apparaissant dans l'image de sélection des valeurs caractéristiques est sélectionnée en réponse à une quatrième entrée de télécommande.
